# EUROPEAN PATENT APPLICATION

(11) **EP 0 562 694 A1**
(43) Date of publication of application: **29.09.1993**
(21) Application number: 93200854.3
(22) Date of filing: 24.03.1993
(51) Int. Cl.: F16K 11/02

(54) **Fluid circulating and intercepting devices**

(30) Priority: 27.03.1992 IT MI920734
(71) Applicant: INSTRUMENTATION LABORATORY S.p.A., I-20128 Milano (IT)
(72) Inventor: Calzi, Claudio, I-20125 Milano (IT); Bonfiglio, Paolo, I-20010 Bareggio (Milan) (IT); Frackleton, John James, Wilmington, MA 01887 (US)
(74) Representative: Faraggiana, Vittorio, Dr. Ing.

(57) **Abstract**

A fluid circulating and intercepting device (10) comprises a first (12) and a second block (11) facing each other with the interposition of an impermeable elastic and flexible diaphragm (13). The first block (12) is provided with at least one concavity (16) with its mouth close to the diaphragm (13) and into which opens out in a substantially axial direction a control fluid feed duct (17). The second block (11) is provided with ducts (14, 15) for circulation of the intercepted fluid which open out on the face in contact with the diaphragm (13), in correspondence with the concavity (16) in the first block (12).

## Description

Various appliances for the circulation and automatic treatment of fluids on a very small scale, such as for example, apparatus used for analysing biological fluids, require fluid circulating and intercepting devices of extremely limited dimensions which can be easily fitted together to form complex circulatory assemblies.

The difficulty in achieving such devices is due both to the precision required in this particular application, and to the large number of operating cycles that the devices must carry out without breakdowns or irregular operation.

Moreover, it is important that the assembly obtained by fitting together even a large number of individual devices remains very compact so as to be able to create complex circuits of limited dimensions, even with a plurality of circulating fluids.

Embodiments of known technique are described in the U.S. patents N° 4,858,883, 4,848,722 4,852,851 4,119,120. These patents show on-off valves achieved by overlapping two blocks of rigid material with the interposition of a flexible diaphragm. One of said two blocks is provided with a concave chamber delimited by the flexible sheet and into which extend two open fluid circulating channels spaced apart from each other. The other block is provided with a duct which communicates with the surface of the diaphragm in a position opposite the chamber in the first block. By connecting the duct to a source of pressure, the flexible sheet flexes towards the inside of the chamber so as to close the passage between the two fluid channels.

The valves made according to this principle, however, present numerous problems. Firstly, the valve closes by contact between the end of the chamber and a diaphragm in a deformed condition and therefore stretched to its maximum capacity. This is not the ideal condition for a perfect seal, and in fact these valves can be easily subject to leakage. The flexible sheet is thrust into a stressed condition against the edges of the channels constituting the apertures to be closed, with the consequence that the life of the diaphragm is relatively short, in relation to the high operating frequency required of the valve. Moreover, when the machine using these valves is turned off, the pressure drops and all the valves open, with the result that the controlled fluids mix together.

Another problem of the known technique is that of ensuring that the valve switches from the open to the closed condition as rapidly as possible. Known valves have channels for the passage of the fluid disposed substantially perpendicular to the end of the chamber and the diaphragm must consequently move a relatively long distance away from it before the opening between the channels is comparable with the section of the channels themselves.

In an attempt to solve the problem, the patents 4,858,883, 4,848,722, 4,852,851 refer to valves having a small groove cut in the end of the chamber and connecting the two channels, for passage of the fluid. According to the intentions of the inventor this groove should enable the valve to open more rapidly. In actual fact, this gives rise to a further source of leakage as well as a discontinuity in the bearing surface of the extended diaphragm, which in the long run ruins the diaphragm due to mechanical abrasion on the edges of the groove.

A further solution proposed by the patents 4,858,883, 4,848,722, 4,852,851 consisted in making the channels for passage of the fluid with their end sections, which open out into the chamber, cut out of the surface of the block parallel to the diaphragm. This, however, produces channel edges which damage the diaphragm. In fact, each time the valve is operated, the diaphragm is forced to partially penetrate into the channels thus subjecting it to mechanical abrasion which shortens its working life.

The general scope of this invention is to obviate the aforementioned problems by providing fluid circulating and intercepting devices which are simple to manufacture and to assemble, extremely long lasting and reliable, switch rapidly from the open to closed position and form an airtight seal in the permanently closed condition, that is with a high response speed, which can be used to create complex circuits as well as pumps.

This scope is achieved, according to the invention, by providing a fluid circulating and intercepting device comprising a first and a second block facing each other with the interposition of an impermeable elastic and flexible diaphragm, the first block being provided with at least one concavity with its mouth close to the diaphragm and into which opens out in a substantially axial direction a control fluid feed duct, the second block being provided with ducts for circulation of the intercepted fluid which open out on the face in contact with the diaphragm, in correspondence with the concavity in the first block.

A device of this kind for example can be used to create a fluid circulating system comprising three of the above described devices, connected together with respective circulation ducts connected in series, the three devices respectively forming a first intake control valve, a pumping device and a delivery control valve, means for feeding control fluid selectively to each of the devices to suck the diaphragm into the concavity of the pumping device when the diaphragm is sucked into the concavity of the intake valve and to push the diaphragm of the pumping device towards its respective contact face when the diaphragm is sucked into the concavity of the delivery valve and the diaphragm of the intake valve is pushed against its respective contact face, in order to form a positive-displacement fluid circulating pump.

The innovatory principles of this invention and its advantages with respect to the known technique will be more clearly evident from the following description of a possible exemplificative embodiment applying said principles, with reference to the accompanying drawings, in which:
- figure 1 shows a schematic cross-sectional view of a fluid circulating element according to the invention, in a closed condition;
- figure 2 shows a view of the element of figure 1 in a fully open condition;
- figure 3 shows an enlarged view of the element of figure 1 in a partially open condition;
- figure 4 shows a first variation of the embodiment of the element of figure 1;
- figure 5 shows a cutaway view along the line V-V of figure 4;
- figure 6 shows a second variation of the embodiment of the element of figure 1;
- figure 7 shows a schematic cross-sectional side view of a first fluid circulating module composed of fluid circulating elements according to the invention;
- figure 8 shows a schematic plan view of a second fluid circulating module composed of fluid circulating elements according to the invention.

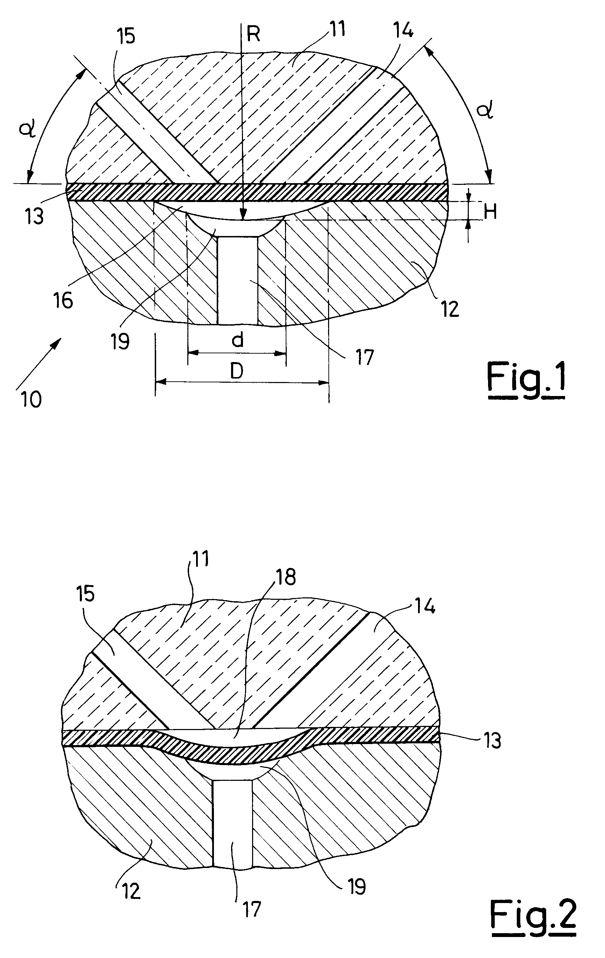

With reference to the figures, figure 1 shows a schematic cross-section of a device, generically indicated by reference 10, made according to the innovatory principles claimed herein. The device 10 comprises two blocks 11 and 12 with surfaces facing each other with interposition of an impermeable elastic sheet 13, constituting a flexible diaphragm, which is sufficiently elastically extensible, and impermeable to liquids and gas. The sheet 13 can be made of thin plastic. By way of example, an impregnated weft backed composite material can be used, or simple sheets. Polyurethane proved to be particularly suitable, with thicknesses in the range of 300-500µm.

Two slanting ducts 14 and 15 are made in the block 11, or fluidic sector, which open out, in positions spaced apart from each other, on the flat surface of the block in contact with the diaphragm 13. Cut out of the block 12, or base, on the opposite side of the diaphragm is a chamber or concavity 16 connected, alternatively, by means of a duct 17 to a source of pressure and vacuum. Said source is neither shown nor further described, since it is of known technique and therefore easily imaginable by the technician.

In the device described the passage between the slanted ducts is normally closed, with the diaphragm, in the relaxed state, that is to say, flat, adhering substantially to the surface of the block 11 also between the slanted ducts.

By creating a vacuum in the chamber 16, by means of the control duct 17, the diaphragm flexes as shown in figure 2, curving into the chamber and thus opening a passage 18 between the ducts.

It has been found to be particularly advantageous for the chamber 16 to be made in the form of a spherical sector to ensure a uniform bearing surface for the deformed diaphragm. In this way it is possible to obtain a substantially predefined and repeatable volume of the space 18 that is created between the ducts when the diaphragm is fully deformed, as well as a precise limit to the strain that the diaphragm must withstand. As is explained further on, the curved surface is also advantageous to enable the diaphragm to be disposed so as to define a substantially radiused passage between the ducts, in addition to a satisfactory sectional area of flow. Since it is essential to avoid excessively sharp edges which could cut the diaphragm, and excessive strain on the diaphragm, it has been found that the ratio between the radius R of the sphere and depth H of the chamber can advantageously range between 3 and 20, in particular a satisfactory range of values is between 5 and 15.

When control fluid (for example air) is conveyed into the duct 17, the diaphragm returns rapidly to the condition of figure 1, thereby closing the passage between the ducts 14 and 15. To accelerate the closure, it has been found advantageous to create a dome or flared portion 19 between the chamber 16 and the duct 17.

In this way, as can be clearly seen in figure 2, the pressure conveyed into the duct 17 to return the diaphragm to its relaxed, or closed condition, acts immediately on a surface area of the diaphragm larger than the sectional area of the duct.

The dome must be small enough to prevent the deformed diaphragm from substantially penetrating into it, but at the same time it must be large enough to enable the pressure to be exerted over a sufficiently large area of the diaphragm. It has been found advantageous also for the dome to be made in the form of a spherical sector, although it can, for example, be conical. The diameter d of the mouth of the flared portion 19 is advantageously at least twice the size of the diameter of the duct 17, but not more than half the diameter D of the mouth of the chamber.

The angle α of inclination of the ducts 14 and 15 with the surface of the diaphragm has been found to be very important. In fact, the smaller the angle, the larger the sectional area of flow of the liquid between the duct and the space 18, even with only slight deformation of the diaphragm. Consequently, the smaller the angle α is then the faster the response in opening the device will be, since it is sufficient for the diaphragm to move even only a slight distance from the outlet surface of the ducts in order to obtain a substantial flow of fluid.

Conversely, the smaller the angle α, the longer the perimeter of the edge of the duct facing the diaphragm.

During operation, there is a consequently larger area of diaphragm involved, greater friction of the diaphragm against the sharp edges, and a greater tendency of the diaphragm to penetrate into the duct and to rest on its sharp outer edge, which all gives rise to irregular wear on the diaphragm, thereby shortening its working life.After innumerable experimental tests, it was found that the best compromise between operating speed and correct fluidic behaviour and working life of the diaphragm is obtained with an angle α ranging from 20° to 60°, in particular from 35° to 50, and with an optimum value in the region of 45°.

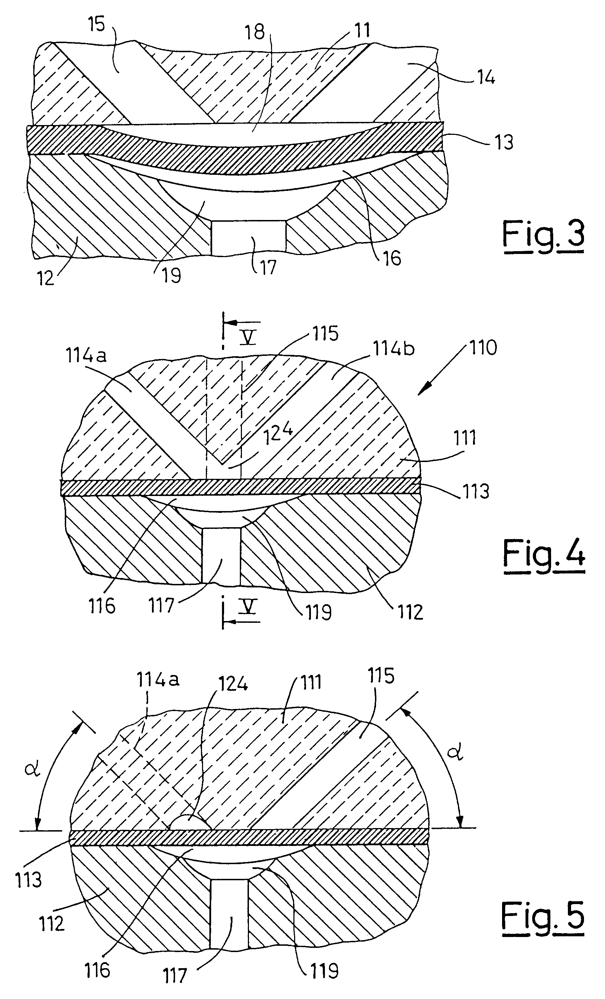

Figure 3 shows an enlarged detail of the interface area between the chamber and the ducts, when the diaphragm is in a half open position. As can be seen, the curve of the diaphragm, even with small transient degrees of deformation, creates a sufficiently uniform connection between the ducts to allow a satisfactory transfer of fluid between them.

Working life values in the range of tens of millions of cycles have been obtained, even with diaphragms of a few tenths of a millimetre, as compared to the few hundred thousand of the devices of known technique.

It is obvious that, with a device made according to the innovatory principles of this invention, it is possible to construct microfluid control elements, such as for example valves or the like, which are extremely durable and quick-acting and do not require servicing for the entire working life of the apparatus.

Figure 4 shows a first possible variation on the embodiment of the device of figure 1. For ease of illustration, similar elements will hereinafter be indicated with numbers identical to those used in figure 1, but preceded by 1. Thus, the device shown in figure 4, and generically indicated by reference 110, is composed of two blocks 111, 112 with opposing surfaces with the interposition of a flexible diaphragm 113.

The block, or fluidic sector, 111 is provided with a first through duct 114 composed essentially of two branches 114a, 114b disposed in the form of a V and with the angle in common communicating with the surface of the block.

The intersection between the two branches is made in such a way as to define a passage 124 which, even when the diaphragm adheres to the surface of the block 111, that is with the device in the closed position, enables a fluid to flow between the branches 114a and 114b.

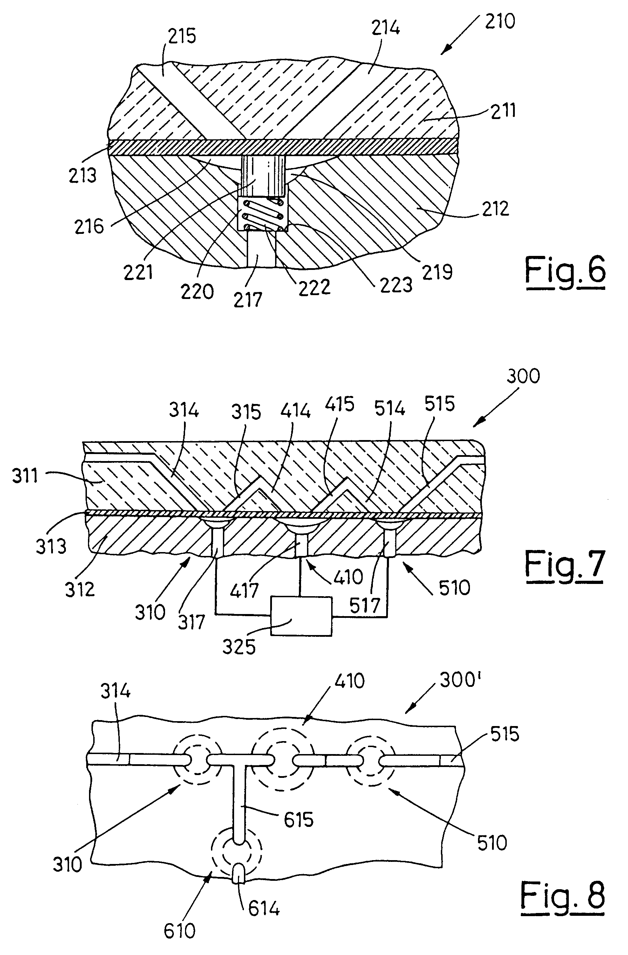

As also shown in figure 5, the block 111 is provided with a second duct 115 which opens out on the surface of the block in correspondence with the diaphragm. As can be clearly seen in figure 6, the duct 115 and the plane containing the duct 114 are slanted in comparison with the diaphragm at an angle α, similar to the angle α of the previous embodiments of figures 1 and 4, to achieve the advantages referred to above.

As already described for the previous embodiments, the deformation of the diaphragm 113 by operation of the device 110, is achieved by means of a chamber 116 connected to a control duct 117, advantageously with the interposition of a flared connection 119, for example dome-shaped, with the dimensional ranges mentioned previously.

With the device 110 it is thus possible to withdraw a fluid, flowing along the through duct 114, and to send it on comand into the duct 115.

Figure 6 shows a possible variation on the embodiment of the control portion of the devices according to the invention, for example as described above. This variation ensures that the device is tightly closed even when no pressure is fed into the control duct while the fluids to be intercepted are subjected to a certain pressure. This can occur for example when switching off a machine comprising the devices according to the invention.

Also for the sake of clarity, elements similar to those shown in the preceding figures, will be indicated hereinafter with numbers identical to those already used in figure 1, but preceded by 2.

The device in figure 6, generically indicated by reference 210, is composed of two blocks 211, 212 with opposing surfaces with the interposition of a flexible diaphragm 213. The block, or fluidic sector, 211 can be made similarly to the blocks or fluidic sectors 11 or 111, described above. This block therefore has slanted ducts 214, 215 for passage of the fluid upon deformation of the diaphragm. Deformation is achieved by creating, by means of a duct 217, a vacuum in a chamber 216 facing the slanted ducts on the opposite side of the diaphragm.

Likewise to that described for the embodiment of figure 1, the chamber 216 is advantageously made in the form of a spherical sector with a dome 219 communicating with the duct 217, all of which advantageously respecting the dimensional ranges indicated above.

In order to achieve the scope of ensuring that the diaphragm forms a tight seal between the ducts 214 and 215 even without pressure or with insufficient pressure in the control duct 217, the latter has a widened portion 220, close to the dome 219, through which slides a loose piston 221. The piston 221 is pushed against the diaphragm 213 by means of a spring 222 reacting against the step 223 formed by the widened portion. The piston has a diameter sufficiently smaller than its housing to allow free passage for direct control of the diaphragm by a fluid fed into the duct 217. In this way, the spring 222 prestresses the diaphragm, pushing it into the closed position. The spring 222 must exert sufficient force as to withstand the hysteresis of the diaphragm and any possible pressures present in the fluid in the ducts 215, 214, and at the same time be able to be compressed by the returning action of the diaphragm caused by the control vacuum in the duct 217.

With the devices described above, it will be easy at this point for the technician to obtain complex fluidic circuits. Due to the inclination of the fluid ducts it is also possible to easily obtain compact assemblies of microfluidic devices. It is obvious, in fact, that several devices can be created on a single fluidic block disposed facing, with interposition of a single large elastic diaphragm, a single base block provided with all the necessary control chambers. The conjunctions between the fluidic ducts can easily be made simply as an intersection in the fluidic sector of the slanted ducts of each individual device, each drilled in the compact block starting from the point in which the duct will open out on the diaphragm.

The fluidic block can advantageously be made as a single piece of plexiglass, as can the base block, milled to obtain the control chambers. The transparency of the material also enables visual control of the circulation of samples.

Figure 7 shows an example of a simple microfluidic assembly 300, made according to the principles claimed herein.

This assembly is composed of a single fluidic block 311 in which ducts 314, 315, 414, 415, 514, 515 are drilled. The intermediate ducts 315 and 414 and the intermediate ducts 415 and 514 are obtained by drilling the material obliquely so as to join the ducts running towards one another.

Disposed facing the block 311, with interposition of a large diaphragm 313, is a base block 312, which contains the chambers 316, 416, 516 and the corresponding control ducts. Thus, with a minimum of machining and assembling operations it is possible to obtain three elements 310, 410, 510 similar to those shown in figure 1, connected together in series.

The overall device 300 obtained can be advantageously used as a precise positive-displacement pump. In fact, the central element can be used as a circulating element, while the lateral elements are intercepting elements, or intake and delivery valves.

When in use, the control ducts 317, 417, 517 are connected to a sequential control device 325 which on command transmits sequences of pressures and vacuums to the control ducts. A device of this kind is easily imaginable by any technician and is therefore not further shown or described.

A simple sequence of pumping operations can comprise the opening of the intake valve 310 and the operation of the central element, which consequently sucks a quantity of fluid from the duct 314 substantially corresponding to the volume of its chamber 416. After which, it is sufficient to close the intake valve 310, open the delivery valve 510 and return the central element 410 to its condition with the diaphragm inflected, thereby pumping a quantity of fluid substantially equivalent to the volume of the chamber 416 through the duct 515. By repeated sequential operation of the three elements it is thus possible to pump volumes of fluid in precise multiples of the pumping volume of the central element 410.

Figure 8 schematically shows a further possible assembly 300' of elements according to the invention. The structure is substantially similar to the one shown and described with reference to figure 7. In addition to that described above, connected between the first element 310 and second element 410 is a duct 614 leading off from a fourth element 610, also constructed according to the invention, and constituting a second intake valve for the central pumping element 410.

By connecting the control ducts of the four devices to a control device as in figure 7 for the assembly 300, it is thus possible to obtain a fluid pumping device which draws the fluid alternately either from the duct 314 or from the duct 614, and conveys the fluids along the outlet duct 515. The two fluids will be intercalated with each other as multiple volume segments of the pumping volume of the element 410. The ratio between the volumes conveyed by the two fluids is extremely easily controlled since it is equivalent to the ratio between cycles of the element 410 carried out in correlation with the elements 310 and 610, respectively.

At this point it will be clear that the intended scopes are achieved by providing fluid intercepting and circulating elements which are structurally simple and exceptionally sturdy. Moreover, the density of integration of these elements into complex assemblies is extremely high, due also to reduction of the external connections between the elements.

The foregoing description of an embodiment applying the innovatory principles of this invention is obviously given by way of example in order to illustrate such innovatory principles and should not therefore be understood as a limitation to the sphere of the invention claimed herein.

For example, whenever an airtight seal is not required for the pumping element of figures 7 and 8, the element can be made with a concave chamber also in the portion containing the fluid ducts, thereby increasing the pumping volume.

Moreover, by simultaneously opening the intake valves 310 and 610 it is possible to simultaneously draw and mix together two different fluids.

Furthermore, it is obvious that the connections between the elements can differ from those shown, in order to adapt to particular structural or fluid processing requirements.

As will be obvious to the technician, the materials used can also be varied depending, for example, upon the chemical properties of the fluids processed.

## Claims

1. Fluid circulating and intercepting device comprising a first and a second block facing each other with the interposition of an impermeable elastic and flexible diaphragm, the first block being provided with at least one concavity with its mouth close to the diaphragm and into which opens out in a substantially axial direction a control fluid feed duct, the second block being provided with ducts for circulation of the intercepted fluid which open out on the face in contact with the diaphragm, in correspondence with the concavity in the first block.

2. Device as claimed in claim 1, characterized by the fact that the fluid circulating ducts are at least two disposed slanting in an opposite direction at an acute angle α compared to the plane of the diaphragm.

3. Device as claimed in claim 2, characterized by the fact that the angle a ranges from 20° to 60°, in particular from 35° to 50°, and is preferably in the region of 45°.

4. Device as claimed in claim 1, characterized by the fact that the concavity is in the form of a spherical sector.

5. Device as claimed in claim 4, characterized by the fact that the ratio between the radius (R) of the sphere and the depth (H) of the concavity ranges from 3 to 20, in particular from 5 to 15.

6. Device as claimed in claim 1, characterized by the fact that the control duct is provided with a flared portion leading into the concavity.

7. Device as claimed in claim 6, characterized by the fact that the diameter (d) of the mouth of the flared portion is at least double the diameter of the control duct.

8. Device as claimed in claim 6, characterized by the fact that the diameter (d) of the mouth of the flared portion is less than half the diameter (D) of the mouth of the concavity.

9. Device as claimed in claim 6, characterized by the fact that that the flared portion is a spherical dome.

10. Device as claimed in claim 1, characterized by the fact that spring members are provided in the concavity to push the diaphragm against the contact surface of the second block.

11. Device as claimed in claim 10, characterized by the fact that the spring members comprise a floating piston biased by a spring against the diaphragm.

12. Device as claimed in claim 11, characterized by the fact that the duct has a widened end section to constitute a sliding housing for the piston and a housing to receive the spring.

13. Device as claimed in claim 1, characterized by the fact that one of the ducts for circulation of the intercepted fluid comprises an incoming branch and an outgoing branch from the point of outlet on the face of the second block in contact with the diaphragm, in order to constitute a through duct for the fluid flowing through it.

14. Device as claimed in claim 13, characterized by the fact that the outgoing and incoming branches are disposed to form a V with each other.

15. Device as claimed in claim 1, characterized by the fact that the thickness of the diaphragm ranges from 100µm to 800µm.

16. Device as claimed in claim 1, characterized by the fact that the diaphragm is made of polyurethane.

17. Device as claimed in claim 1, characterized by the fact that at least the second block is made of transparent plastic material.

18. Fluid circulating assembly comprising three intercepting and circulating devices as claimed in claim 1, joined together with respective circulation ducts connected in series, the three devices respectively constituting a first intake control valve, a pumping device and a delivery control valve, means for feeding control fluid selectively to each of the devices to suck the diaphragm into the concavity of the pumping device when the diaphragm is sucked into the concavity of the intake valve and to push the diaphragm of the pumping device towards the respective contact face when the diaphragm is sucked into the concavity of the delivery valve and the diaphragm of the intake valve is thrust against the respective contact face, in order to form a fluid circulating positive-displacement pump.

19. Assembly as claimed in claim 18, characterized by the fact that connected to the ducts between the first and second device of the series is a circulation duct belonging to a fourth device made as claimed in claim 1, said fourth device forming a second intake valve for the pump, in order to constitute a fluid mixing or segmenting pump connected to the inlet of the first or the second intake valve.

20. Assembly as claimed in claim 18, characterized by the fact that the devices share a common first block, second block and diaphragm, in order to form a single element with ducts for circulation between the devices formed entirely in the second common block.
